Europäisches Patentamt

European Patent Office

Office européen des brevets

(11) Numéro de publication : **0 508 912 A1**

# (12) DEMANDE DE BREVET EUROPEEN

(21) Numéro de dépôt : **92420109.8**

(22) Date de dépôt : **07.04.92**

(51) Int. Cl.⁵ : **A63H 3/28,** A63H 30/04

(30) Priorité : **12.04.91 FR 9104764**

(43) Date de publication de la demande :
**14.10.92 Bulletin 92/42**

(84) Etats contractants désignés :
**BE CH DE ES FR GB IT LI**

(71) Demandeur : **INFO TELECOM**
**Rue de la Forêt**
**F-67550 Vendenheim (FR)**

(72) Inventeur : **Schott, Michel**
**Rue de la Forêt**
**F-67550 Vendenheim (FR)**

(74) Mandataire : **Laurent, Michel et al**
**Cabinet LAURENT et CHARRAS, 20, rue Louis**
**Chirpaz B.P. 32**
**F-69131 Ecully Cedex (FR)**

(54) **Procédé et dispositif pour matérialiser une interaction virtuelle entre un objet et un support d'informations.**

(57)    Ce procédé consiste :

— à intégrer au niveau dudit objet un dispositif électronique apte à permettre la réalisation d'une action ou d'une série d'actions, stockées sous forme de signaux dans une mémoire associée (2) ;

— à mettre en place au niveau dudit objet une séquence d'informations destinées à définir un séquencement particulier desdits éléments, en vue d'induire au niveau de l'objet une action ou une série d'actions ;

— à concevoir au niveau du support d'informations une émission tenant compte desdits éléments et de leur séquencement ;

— à définir au moment du commencement de l'émission une synchronisation entre le déroulement de ladite émission et le séquencement des actions au niveau de l'objet.

FIG. 2

EP 0 508 912 A1

L'invention concerne un nouveau procédé apte à permettre la matérialisation d'une intéraction virtuelle notamment sous forme de dialogue, entre un support d'informations du type radio ou télévision, et un objet, voire plus spécifiquement un jouet. Par interaction, on entend également toute réaction au sens large de l'objet, et typiquement un son, une action mécanique, une action lumineuse, etc.

Par "interaction virtuelle", on entend au sens de l'invention, une intéractivité apparente, non réelle, car elle ne résulte pas d'un échange d'informations physiques entre l'objet et le support d'informations, mais d'un séquencement d'échange pré-programmé au niveau dudit objet, notamment par le concepteur de l'émission de radio ou de télévision, et synchrone avec cette émission.

A ce jour, les objets actifs, tels que par exemple les jouets parlants sont de plus en plus largement répandus. De manière générale, ils intègrent une synthèse de parole ou une bande magnétique, susceptible d'être lue par un lecteur approprié, incorporé dans le jouet, et dont l'activation résulte soit d'une commande externe, par exemple par l'utilisateur du jouet, soit d'un positionnement particulier dudit jouet, notamment de manière générale de poupées et/ou autres peluches. Quoiqu'il en soit, on ne connait pas à ce jour de dispositifs et notamment de jouets susceptibles de répondre, avec un support d'informations, et notamment avec une émission radiophonique ou télévisée.

On a décrit, par exemple dans le document US-A-4 840 602, un procédé permettant la réalisation d'une interactivité, dans lequel le dialogue s'établit entre un personnage et soit un ou plusieurs autres personnages, soit une source audio comportant des données de contrôle, soit une source vidéo, éventuellement couplée à une source audio, et comportant également des moyens de contrôle. Quel que soit l'interlocuteur de l'interactivité, il comporte un récepteur radio, destiné à permettre la réception des signaux de contrôle déterminant les éléments d'un dialogue. De fait, l'échange de données de contrôle est nécessaire pendant toute la durée de la phase d'interactivité. En d'autres termes, le procédé ainsi décrit consiste à munir un personnage, par exemple une poupée d'une éléctronique de synthèse de paroles, à laquelle on a rajouté un récepteur radio susceptible de recevoir des informations codées constitutives de données de contrôle, déterminant la sélection des phrases stockées dans la mémoire associée à l'électronique de synthèse de paroles.

On a également décrit, par exemple dans le document US-A-4 846 693, un autre procédé mettant en jeu l'interactivité entre un personnage et un système relié à un recepteur de télévision, cette interactivité se matérialisant par le biais d'une source unique : la source audio. Ce procédé nécessite des moyens de commutation vers le haut-parleur du personnage ou du système. Comme dans le cas précédent, ce procédé impose l'envoi continu de données de contrôle, afin d'assurer l'"aiguillage" correct des éléments du dialogue tout au long de l'émission. Defait, cette nécessité implique la mise en place d'une connexion physique du personnage sur le téléviseur. En outre, un tel procédé ne peut convenir que dans les cas où la source audio, voire vidéo est locale, se matérialisant par exemple sous la forme d'un lecteur de cassettes audi, vidéo, ou un lecteur de vidéo-disques. En effet, dans le cadre d'une émission télé- ou radio-diffusée, l'interactivité ne peut se matérialiser pour un téléspectateur ou un auditeur dépourvu du système décrit, dans la mesure où l'émission ne serait pas alors compréhensible.

L'invention vise un procédé autorisant une mise en interaction virtuelle et synchrone entre une support d'informations notamment radiophonique ou télévisé et un objet notamment une poupée, peluche, téléphone, instrument de musique, tableau de bord d'un véhicule, etc... . Ce procédé pour matérialiser une interaction virtuelle entre un objet et un support d'informations consiste :

– à intégrer au niveau dudit objet un dispositif électronique apte à permettre la réalisation d'une action ou d'une série d'actions, stockées sous forme de signaux dans une mémoire associée ;
– à mettre en place au niveau dudit objet une séquence d'informations destinées à définir un séquencement particulier desdits éléments, en vue d'induire au niveau de l'objet une action ou une série d'actions définies ;
– à concevoir au niveau du support d'informations une émission sur la base desdits éléments et de leur séquencement ;
– à définir au moment du commencement de l'émission une synchronisation entre le déroulement de ladite émission et le séquencement des actions au niveau de l'objet.

En d'autres termes, le séquencement des éléments-base de l'interactivité, et notamment des phrases d'un dialogue, est prédeterminé dès le paramétrage de l'objet, indépendemment du démarrage de l'émission. La synchronisation est obtenue au moyen d'un "top" de démarrage généré par tout moyen, et par exemple directement au niveau dudit objet, de sorte qu'aucune liaison tant radio que physique n'est nécessaire.

Dans une première forme de réalisation de l'invention, la mise en place de la séquence d'informations s'effectue en externe, par des paramètres fournis au dispositif électronique de l'objet, par le biais de la transmission de signaux sous forme codée. Dans ce cas, l'objet est muni d'un capteur, apte à capter les signaux transmis par le support d'informations ou un émetteur indépendant, lesdits signaux étant décodés par le dispositif électronique. Ce système de décodage est par exemple décrit dans le document EP-B- 010 794.

De manière avantageuse, les signaux codés sont transmis audit objet sous forme de signaux électriques, optiques, acoustiques, hertziens, ondes-radio, lesdits signaux étant alors soit captés au moyen de capteurs associés audit objet, typiquement capteur optique, acoustique, ou antenne, soit transmis à l'objet par le biais de connexions électriques à partir du support d'informations.

Dans une seconde forme de réalisation de l'invention, la génèse de la séquence d'informations s'effectue en interne, par le biais d'un générateur pseudo-aléatoire intégré audit objet, dans lequel on introduit une semence et/ou un code externe. Le fonctionnement de cette pseudo-interactivité est plus largement décrit dans la demande de brevet français déposée sous le n° 90 12463. Ce procédé particulier consiste :

– à générer au niveau d'un boîtier électronique une séquence périodique de chiffres générés selon une logique pseudo-aléatoire par le biais d'un générateur intégré dans le circuit électronique du boîtier, cette séquence périodique étant fonction d'une donnée ou semence introduite dans ledit générateur contenu dans le circuit électronique, et représentative d'une suite d'informations non accessibles par l'utilisateur ;

– à interpréter cette suite d'informations pour induire un séquencement particulier des éléments stockés dans la mémoire associée dudit objet ;

– et à restituer, au niveau de l'objet, le résultat de ce séquencement sous la forme d'une action ou d'une série d'actions.

Dans une forme de réalisation particulère de l'invention, l'interaction est vocale, sous forme de dialogue avec l'émission de radio ou de télévision . Dans ce cas, l'objet est muni d'un haut-parleur associé à un dispositif à synthèse vocale, afin de pouvoir effectivement restituer sensoriellement les phrases sélectionnées dans sa mémoire asociée.

Dans ce cas particulier, l'invention consiste, après avoir stocké un certain nombre d'éléments de phrases, voire de phrases entières, au niveau de l'objet proprement dit que l'on désire introduire dans le dialogue, à sélectionner notamment par le biais de signaux codés, l'ordre, les intervalles de temps, ainsi que la nature de ces phrases et ce au moyen de signaux codés émis directement par le support d'informations, voire préalablement séquencé par le biais d'une génèse pseudo-aléatoire de signaux.

Ainsi selon cette forme particulière de réalisation, la bande sonore qui provient de la source audio-vidéo est exclusivement destiné au haut-parleur du téléviseur. Les éléments sonores générés par synthèse de paroles au niveau de l'objet, viennent uniquement en complément de la bande son du téléviseur. Il ne s'agit alors que d'une interactivité virtuelle.

Dans une forme avantageuse de l'invention, l'objet, constitué par une poupée, une peluche etc.. comporte un boîtier électronique muni d'une mémoire dans laquelle sont stockés les différents éléments de phrase, chacun d'entre eux étant référencé dans ladite mémoire. La sélection de ces éléments ainsi que l'instant de leur restitution sonore sont gérés soit par le biais de signaux émis par le support d'informations ou un émetteur indépendant, et captés par ledit boîtier, soit par le biais d'un générateur pseudo-aléatoire, dont la semence a été préalablement introduite.

L'invention concerne également le dispositif apte à mettre en oeuvre le procédé ci-dessus décrit. Ce dispositif est constitué par un boitier électronique intégrant un circuit électronique constitué principalement d'une mémoire associée à un micro-contrôleur, ce dernier étant apte à décoder les signaux captés par un capteur associé et à les transformer en signaux binaires, propre à sélectionner dans la mémoire les séquences d'éléments nécessaires à la réalisation d'une action ou d'une série d'actions, et notamment des éléments de phrases, voire des phrases entières, dans le cadre d'un dialogue virtuel.

L'invention concerne également un dispositif apte à mettre en oeuvre la seconde forme de réalisation du procédé décrit précédemment. Ce dispositif est constitué par un boîtier électronique intégrant un micro-contrôleur gérant un algorithme apte à générer une suite périodique de chiffres de nature pseudo-aléatoire à partir d'une semence préalablement introduite, de manière externe par rapport audit boîtier, au moyen d'un organe d'introduction de données, ou de manière interne sous la forme d'une donnée d'horodatage à partir de l'horloge interne qu'il contient.

Dans ce cas, l'horloge jouant alors le rôle d'organe de synchronisation, permet d'assurer un séquencement rigoureux de la génèse (par synthèse vocale) des phrases. Dès lors, les données de contrôle n'ont pour seule fonction que le paramétrage du dialogue. Ce paramétrage est réalisé en début d'émission et en une seule fois. Comme ce paramétrage peut être dissocié de l'émission, il n'est pas nécessaire que les données de contrôle figurent dans la source audio-vidéo, et par conséquent, une liaison physique avec le récepteur de télévision est inutile. En outre, du fait que ce procédé ne conduit à aucune altération du dialogue au niveau du récepteur de télévision, il s'avère tout particulièrement adapté à des émission télé-diffusées, puisque les téléspectateurs non équipés de l'ensemble du système peuvent malgré tout suivre l'émission normalement.

La manière dont l'invention peut être réalisée et les avantages qui en découlent ressortiront mieux de l'exemple de réalisation qui suit donné à titre indicatif et non limitatif à l'appui des figures annexées.

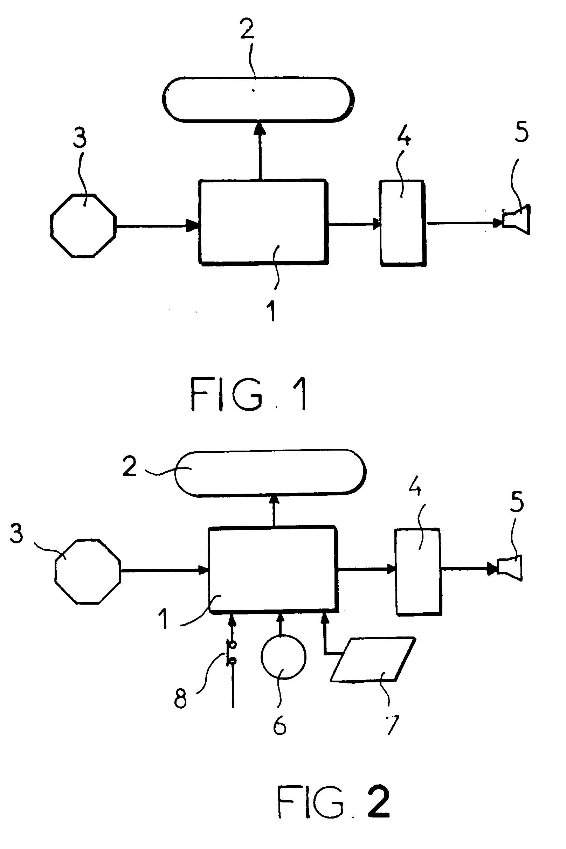

La figure 1 représente un schéma synoptique simplifié du circuit électronique du dispositif apte à mettre en oeuvre le procédé conforme à l'invention.

La figure 2 est une représentation schématique du synoptique du circuit électronique d'une autre forme de réalisation de l'invention.

L'exemple qui suit est plus particulièrement décrit en liaison avec un support d'informations constitué par une émission de télévision. Néanmoins, il va de soit que l'invention ne saurait se limiter à cette seule forme de réalisation, et que tout autre support de type intéractif et typiquement une émission radiophonique, un support cinématographique etc..., entre dans le cadre de la présente invention.

On munit une poupée d'un boîtier électronique comportant un micro-contrôleur portant la référence numérique (1) associé à une mémoire (2). On charge dans cette mémoire (2) et ce par tous moyens appropriés, préalablement à l'introduction du boîtier dans la poupée, un certain nombre de séquences de phrases vocales ou de partie de phrases sous forme binaire et ce de manière connue. Chacune des séquences de phrases sont répertoriées dans ladite mémoire (2) sous un label approprié.

Le micro-contrôleur (1) est également associé à un synthétiseur de paroles (4), lui même relié à un haut-parleur (5), et ce de manière traditionnelle en vue de restituer sous forme vocale les phrases ou séquences de phrases stockées dans la mémoire (2), après sélection par le micro-contrôleur (1).

Le dispositif électronique comporte en outre un capteur (3), directement relié au micro-contrôleur (1), et destiné à transformer des signaux codés sous forme de signaux numériques intelligibles par le micro-contrôleur. De ce fait, et selon le type de signaux utilisés, ce capteur est un capteur acoustique, optique, ou une simple antenne dans le cadre de signaux radio ou hertziens. Dans une autre forme de réalisation, le capteur est supprimé, et le boîtier électronique est relié électriquement au support d'informations comme il sera décrit par ailleurs plus en détail ultérieurement.

Selon l'invention, le support d'informations et en l'occurence l'émission télévisée émet de manière inaccessible aux téléspectateurs, une séquence d'informations sous forme codée. Ces signaux codés peuvent être comme dit précédemment, acoustiques, optiques, hertziens ou ondes-radio voire électriques. Ils permettent ainsi de transférer et de télécharger une série d'informations au boitier électronique contenu dans la poupée. Typiquement, ces informations correspondent à un choix de phrases ou séquences de phrases ainsi qu'à leur ordre d'enchainement. Cette séquence d'informations est également destinée à gérer l'intervalle de temps séparant deux phrases au sein des phases vocales, afin de pouvoir matérialiser un dialogue avec les phrases et autres péripéties affichées à l'écran de télévision.

En d'autres termes, le concepteur de l'émission de télévision peut prévoir en plus du simple scénario de son émission, la séquence des phrases susceptibles d'interagir avec ce scénario. Pour ce faire, il connait bien entendu les différentes séquences de phrases disponibles dans la mémoire du boitier électronique de la poupée.

La mise en place dans le temps de l'interaction virtuelle entre l'émission de télévision et l'objet peut se faire naturellement et automatiquement au moyen d'une horloge interne intégrée dans le boitier électronique régissant les comportements temporels de l'objet. Pour ce faire, il importe que la synchronisation de l'émission de télévision et de l'objet soit parfaitement réalisée faute de quoi, on aboutit très rapidement à un recouvrement des phases de paroles de la poupée et de l'émission. En d'autres termes, l'émission du support d'informations est réalisée de manière synchrone en fonction de la connaissance préalable du contenu de la mémoire de l'objet, et notamment de la poupée, et de la séquence d'informations générée à son niveau.

Dans une version améliorée, on peut prévoir un top de synchronisation précédant le déroulement du dialogue virtuel, permettant ainsi un positionnement relatif du dialogue virtuel dans le temps. En d'autres termes, dès que l'émission de télévision commence, le téléspectateur appuie par exemple sur un bouton poussoir, matérialisant de la sorte le top de synchronisation, et permettant ainsi le démarrage du dialogue virtuel entre les personnages de l'émission considérée et la poupée. Ainsi, à l'heure voulue, l'émission vocale de l'objet en phase avec l'émission de télévision donnent l'illusion du dialogue.

Avantageusement, et notamment dans le cas d'un téléchargement réalisé au préalable, et selon un délai permettant de prévoir de manière certaine le déroulement des programmes, le top de synchronisation peut être confondu avec le téléchargement.

Selon la capacité mémoire du boîtier électronique, on peut prévoir un plus ou moins grand nombre d'échantillonages de phrases possibles. De la sorte, on peut concevoir que le concepteur de l'émission radio télévisée peut envisager toutes sortes d'émissions dans lesquelles l'intéractivité du dispositif peut être mise en oeuvre, tout au moins virtuellement pour les téléspectateurs ou les auditeurs, résultat que l'on ne savait obtenir jusqu'à ce jour.

Dans une seconde forme de réalisation de l'invention, le boîtier électronique contenu dans l'objet, renferme un générateur pseudo-aléatoire, intégré dans le micro-contrôleur (1), susceptible de générer, après ensemencement d'une ou de plusieurs données, une séquence périodique de chiffres pseudo-aléatoire, pouvant être interprétée par ledit boîtier et pouvant donner lieu à la sélection dans la mémoire associée (2) et selon des intervalles de temps également déduit de cette séquence, de phrases ou morceaux de phrases bien définis. La semence introduite dans le générateur peut l'être soit par voie externe, à partir d'un code transmis à partir du support d'informations ou d'un émetteur indépendant, par voie manuelle, optique, acoustique, hertzienne, ondes radio, etc., voire électrique, le boîtier étant alors muni d'un capteur (3) et d'un transformateur approprié, soit par voie interne via une donnée d'horodatage délivrée par une horloge interne (6), soit encore par une combinaison des deux.

Cette semence peut également s'accompagner de l'introduction d'une clé électronique sous la forme d'un code, introduit par exemple par le possesseur de l'objet, c'est à dire de la poupée, par le biais d'un clavier miniature (7) situé à la surface de l'objet, et éventuellement occulté par un habit, etc...

La génèse de la séquence pseudo-aléatoire obeït à un algorithme connu du concepteur de l'émission, qui établit l'émission en fonction des dialogues ou actions généres au niveau de l'objet .

Dans le cadre de ce procédé, on a également recours à un top de synchronisation, destiné à assurer un parfait synchronisme entre l'émission et les actions ou la génèse de paroles au niveau de l'objet. Avantageusement, ce top peut être intégré avec le code externe introduit dans le boîtier. Néanmoins, on peut concevoir que ce top de synchronisation soit introduit par l'utilisateur, par exemple au moyen d'un bouton-poussoir (8).

Le procédé conforme à l'invention permet ainsi de réaliser une interaction entre tout type d'objet et une émission radio ou télévisée, de manière simple. En outre, cette interaction est synchrone entre l'émission et les actions de l'objet.

**Revendications**

**1/** Procédé pour matérialiser une interaction virtuelle entre un objet et un support d'informations **caractérisé** en ce qu'il consiste :
– à intégrer au niveau dudit objet un dispositif électronique apte à permettre la réalisation d'une action ou d'une série d'actions, stockées sous forme de signaux dans une mémoire associée (2) ;
– à mettre en place au niveau dudit objet une séquence d'informations destinées à définir un séquencement particulier desdits éléments, en vue d'induire au niveau de l'objet une action ou une série d'actions ;
– à concevoir au niveau du support d'informations une émission tenant compte desdits éléments et de leur séquencement ;
– à définir au moment du commencement de l'émission une synchronisation entre le déroulement de ladite émission et le séquencement des actions au niveau de l'objet.

**2/** Procédé selon la revendication 1, caractérisé en ce que le séquencement d'actions au niveau de l'objet est commandé et géré en externe par des paramètres transmis audit dispositif électronique de l'objet, par le biais de la transmission de signaux sous forme codée, l'objet étant alors muni d'un capteur, apte à capter les signaux transmis, ceux-ci étant alors décodés par ledit dispositif électronique.

**3/** Procédé selon la revendication 2, caractérisé en ce que les signaux codés sont transmis audit objet à partir du support d'informations ou d'un émetteur indépendant sous forme de signaux optiques, acoustiques, hertziens, ou ondes-radio, lesdits signaux étant alors captés au moyen de capteurs appropriés associés audit objet.

**4/** Procédé selon la revendication 2 caractérisé en ce que les signaux codés sont transmis au dit objet à partir du support d'informations ou d'un émetteur indépendant sous formes de signaux électriques, par le biais de connexions électriques reliant l'objet au dit support d'informations.

**5/** Procédé selon la revendication 1, caractérisé en ce que la génèse de la séquence d'informations s'effectue en interne, par le biais d'un générateur pseudo-aléatoire intégré audit objet, dans lequel on introduit une semence et/ou un code externe.

**6/** Procédé selon la revendication , caractérisé en ce qu'il consiste :
– à générer au niveau d'un boîtier électronique une séquence périodique de chiffres générés selon une logique pseudo-aléatoire par le biais d'un générateur intégré dans le circuit électronique du boîtier, cette séquence périodique étant fonction d'une donnée ou semence introduite dans ledit générateur contenu dans le circuit électronique, et représentative d'une suite d'informations non accessibles par l'utilisateur ;
– à interpréter cette suite d'informations pour induire un séquencement particulier des éléments stockés dans la mémoire associée dudit objet ;
– et à restituer, au niveau de l'objet, le résultat de ce séquencement sous la forme d'une action ou d'une série d'actions.

**7/** Procédé selon l'une des revendications 1 à 6, caractérisé en ce que l'interaction virtuelle s'effectue sous forme vocale, sous forme de dialogue entre l'objet et l'émission de radio ou de télévision, l'objet étant alors muni d'un haut-parleur (5) associé à un organe de synthèse de paroles (4).

**8/** Dispositif pour la mise en oeuvre du procédé selon l'une des revendications 1 à 4, caractérisé en ce qu'il comprend un boîtier électronique comprenant un circuit électronique constitué d'une mémoire (2) associée à un micro-contrôleur (1), ce dernier étant apte à décoder les signaux captés par un capteur (3) relié audit micro-contrôleur, et à les transformer en signaux binaires, propres à sélectionner dans la mémoire (2) les séquences d'éléments nécessaires pour la réalisation d'une action ou d'une série d'actions.

**9/** Dispositif selon la revendication 8 pour la mise en oeuvre du procédé selon la revendication 7, caractérisé en ce qu'il comprend en outre :

– un synthétiseur de parole (4), relié au micro-contrôleur (1), associé à un haut-parleur (5), et destiné à matérialiser sous forme vocale les phrases et séquences de phrases sélectionnées par le micro-contrôleur (1) dans la mémoire (2) sur injonction des signaux codés captés et transformés par ledit micro-contrôleur (1).

10/ Dispositif pour la mise en oeuvre du procédé selon la revendication 6, caractérisé en ce qu'il est constitué par un boîtier électronique intégrant un micro-contrôleur (1) gérant un algorithme apte à générer une suite périodique de chiffres de nature pseudo-aléatoire à partir d'une semence préalablement introduite, de manière externe par rapport audit boîtier, au moyen d'un organe d'introduction de données (7), ou de manière interne sous la forme d'une donnée d'horodatage à partir de l'horloge interne (6) intégrée dans ledit micro-contrôleur.

FIG . 1

FIG. 2

**Office européen des brevets**

# RAPPORT DE RECHERCHE EUROPEENNE

Numero de la demande

EP 92 42 0109

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X<br>A | US-A-4 840 602 (ROSE)<br>* colonne 4, ligne 10 - colonne 14, ligne 54; figures 1A,1B,3-5 *<br>--- | 1,2,8-10<br>3-7 | A63H3/28<br>A63H30/04 |
| D,X<br>A | US-A-4 846 693 (BAER)<br>* colonne 8, ligne 44 - colonne 10, ligne 30; revendication 1 *<br>--- | 1,2,8,9<br>3-7,10 | |
| A | GB-A-2 201 068 (DAVIES)<br>abrégé<br>--- | 3 | |
| A | US-A-4 930 019 (CHU)<br>* colonne 2, ligne 55 - colonne 3, ligne 11 *<br>--- | 1-10 | |
| A | WO-A-8 707 522 (SASAKI)<br>abrégé<br>--- | 1,8,10 | |
| A,D | EP-B-0 010 794 (HERMANS)<br><br>----- | 1,8,10 | |

**DOMAINES TECHNIQUES RECHERCHES (Int. Cl.5)**

A63H

Le présent rapport a été établi pour toutes les revendications

| Lieu de la recherche | Date d'achèvement de la recherche | Examinateur |
|---|---|---|
| LA HAYE | 16 JUILLET 1992 | VANRUNXT J. |